# EUROPEAN PATENT APPLICATION

(11) **EP 1 623 827 A2**
(43) Date of publication of application: **08.02.2006**
(21) Application number: 05016749.3
(22) Date of filing: 02.08.2005
(51) Int. Cl.: B32B 37/00, E04B 9/00

(54) **Process for producing facing panels for false ceilings, and apparatus for implementing the process**

(30) Priority: 02.08.2004 IT VE20040034
(71) Applicant: DALCOS S.p.A., 31033 Castelfranco Veneto (IT)
(72) Inventor: Dallan, Andrea, 31033 Castelfranco Veneto (IT)
(74) Representative: Piovesana, Paolo

(57) **Abstract**

A process for producing facing panels for false ceilings comprising an initial step of forming, in a metal sheet (6) unwound from rolls, a plurality of perforated sectors corresponding to the perforated regions of the panels to be obtained, characterised in that a web (24) of soundproofing material is continuously coupled securely to the perforated web, the two coupled webs (6, 24) being then cut through transversely for subsequent formation of the individual panel.

## Description

The present invention relates to a process for producing facing panels for false ceilings, and an apparatus for implementing the process.

For forming false ceilings. panels are known consisting of a metal sheet with bent edges and provided with a plurality of holes.

To improve the effectiveness of sound insulation, a sheet of non-woven fabric impregnated with glue is applied to the panels, the glue then being activated by administering heat. The dimensions of the non-woven fabric are slightly greater than those of the perforated region of the panel.

These known panels however present certain drawbacks, and in particular:
- laborious construction because of the need to cut from the reel of non-woven fabric the individual squares corresponding to the perforated surface of the panel, apply the squares and then securely fix them,
- increased storage space due to the bulk of the prepared but not yet fabriclined panels.

These drawbacks are eliminated according to the invention by a process for producing facing panels for false ceilings as described in claim 1.

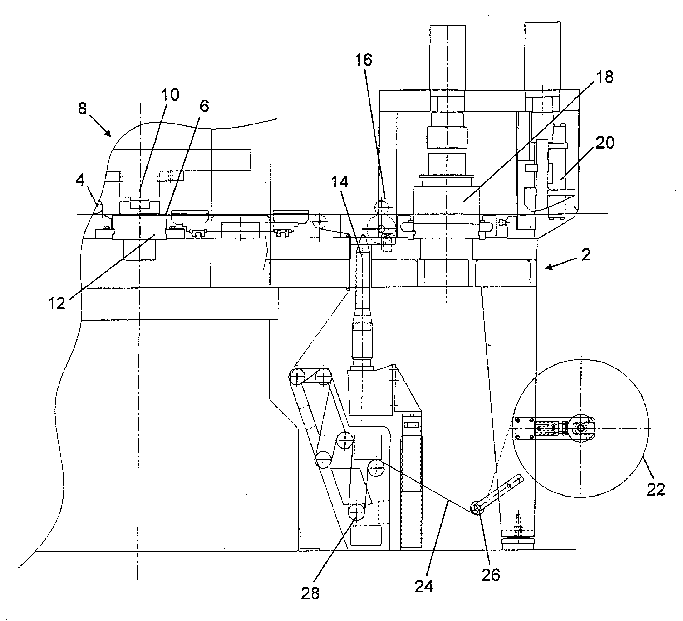

A preferred embodiment of the present invention is described hereinafter with reference to the accompanying drawing showing a partial schematic view of an apparatus for implementing the process of the invention.

As can be seen from the figure the apparatus for implementing the process of the invention comprises a bench 2 provided with rollers 4 for advancing the sheet metal web 6 unwound from a roll (not shown in the drawing).

On the bench 2 there is mounted a perforating unit 8 consisting of a multi-point punch 10 faced by a corresponding die 12.

Downstream of the unit with reference to the advancement direction of the sheet metal web, there are a heating unit 14, a pair 16 of presser rollers, a corner trimming unit 18, and a cutting unit 20.

In a position below the bench the is provided a reel 22 from which a web 24 of a soundproofing material already impregnated with a heat-activatable glue is unwound, this web being guided by tension rollers 26 and guide rollers 28 as far as a region of the bench between the perforating unit and the heating unit.

In operating the apparatus of the invention, the sheet metal web 6 is unwound from the roll and after passing through the straightening unit (not shown in the drawing) it is subjected to the action of the perforating unit, which forms a plurality of holes in that surface constituting the exposed surface of the perforated panel.

The web 24 of soundproofing material is then coupled to the web 6 perforated in this manner and is then subjected to the action of the heating unit 14 at a temperature of about 150°C so that the activated glue performs its fixing action.

The sheet metal web 6 and the web of soundproofing material 24 are then subjected to the action of presser rollers 16 which irreversibly secure them together.

The webs 6 and 24 are then cut to form the square constituting the perforated panel, which is then subjected to edge bending action (bending machine not shown).

From the aforegoing it is apparent that the process of the invention presents numerous advantages, and in particular:
- a reduction in production times as the panel and soundproofing element can be cut off simultaneously,
- a reduction in the storage space requirements for semi-finished products, because of the elimination of intermediate panels without soundproofing lining,
- elimination of costly equipment for automatic application of the soundproofing element, or alternatively a saving in manual application work.

## Claims

1. A process for producing facing panels for false ceilings comprising an initial step of forming, in a metal sheet (6) unwound from rolls, a plurality of perforated sectors corresponding to the perforated regions of the panels to be obtained, **characterised in that** a web (24) of soundproofing material is continuously coupled securely to the perforated web, the two coupled webs (6, 24) being then cut through transversely for subsequent formation of the individual panel.

2. A process as claimed in claim 1, **characterised by** applying the web of soundproofing material by means of a glue.

3. A process as claimed in claim 2 **characterised by** using a web of soundproofing material impregnated with a heat-activatable glue, the web being heated prior to its application.

4. An apparatus for implementing the process claimed in one of claims from 1 to 3, **characterised by** comprising a bench (2) for advancing the sheet metal web (6) unwound from a roll, a multiple perforating unit (8) for said web, a reel (22) from which a web (24) of soundproofing material is unwound, deviator means for bringing said webs face to face, and means for coupling said facing webs together.

5. An apparatus as claimed in claim 4, **characterised by** comprising a unit (14) for heating (24) the web of soundproofing material impregnated with a heat-activatable glue.
